# EUROPEAN PATENT APPLICATION

(11) **EP 4 746 469 A1**
(43) Date of publication of application: **20.05.2026**
(21) Application number: 24850861.6
(22) Date of filing: 30.07.2024
(51) Int. Cl.: H04W 8/24

(54) **COMMUNICATION METHOD AND APPARATUS**

(30) Priority: 10.08.2023 CN 202311010644
(71) Applicant: Huawei Technologies Co., Ltd., Shenzhen, Guangdong 518129 (CN)
(72) Inventor: HA, Yinaer, Shenzhen, Guangdong 518129 (CN); GENG, Tingting, Shenzhen, Guangdong 518129 (CN); ZENG, Yu, Shenzhen, Guangdong 518129 (CN)
(74) Representative: Pfenning, Meinig & Partner mbB
(86) International application number: PCT/CN2024/108493
(87) International publication number: WO 2025/031213

(57) **Abstract**

Embodiments of this application provide a communication method and apparatus, so that AS data collection of a terminal device can be implemented in an EVEX data collection framework. The method includes: A network device screens, by sensing a data collection capability supported by an AS of a terminal device, a first configuration that is delivered by an application providing entity and that is used by the terminal device to collect AS data expected by the application providing entity, and filters out a data collection configuration that is not supported by the terminal device from the first configuration, so that the data collection capability supported by the AS of the terminal device adapts to a selected configuration, to implement AS data collection.

## Description

This application claims priority to Chinese Patent Application No. 202311010644.4, filed with the China National Intellectual Property Administration on August 10, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

In an event exposure (event exposure, EVEX) data collection framework, a data collection application function (data collection application function, DCAF) may obtain application layer data of user equipment (user equipment, UE) through a direct data collection client (direct data collection client, DDCC), or may obtain application layer data of UE through an indirect data collection client (indirect data collection client, IDCC). In the EVEX data collection framework, only a specific mechanism for collecting application layer data of UE is defined, and there is no appropriate method for collecting access stratum (access stratum, AS) data of the UE.

### SUMMARY

Embodiments of this application provide a communication method and apparatus, so that AS data collection of UE can be implemented in an EVEX data collection framework.

To achieve the foregoing objectives, the following technical solutions are used in embodiments of this application.

According to a first aspect, a communication method is provided. The method may be performed by a network device, or may be performed by a part of the network device, for example, a processor, a chip, or a chip system of the network device; or may be implemented by a logical module or software that can implement all or some functions of the network device. An example in which the method is performed by the network device is used below for description. The method includes: The network device receives first capability information from a terminal device, where the first capability information indicates a data collection capability supported by an access stratum AS of the terminal device. The network device receives a first configuration from an application providing entity, where the first configuration is used by the terminal device to collect AS data expected by the application providing entity. The network device determines, from the first configuration based on the first capability information, a configuration that is supported by the terminal device and that is used for AS data collection.

According to the communication method, the network device senses the data collection capability supported by the AS of the terminal device, screens the first configuration that is delivered by the application providing entity and that is used by the terminal device to collect the AS data expected by the application providing entity, and filters out a data collection configuration that is not supported by the terminal device from the first configuration, so that the data collection capability supported by the AS of the terminal device adapts to a selected configuration, to enhance management and control of collected AS data and a related configuration by the network device, so as to implement the AS data collection. In this way, the collected AS data may be opened to the application providing entity or another network entity, so that the application providing entity or the another network entity may complete related event processing based on the open AS data, to implement effective use of the AS data.

In a possible design solution, the network device is an access network device or an access and mobility management network element; and that the network device receives the first configuration from the application providing entity may include: The network device receives the first configuration from the application providing entity through a data collection application entity. According to this design solution, the first configuration delivered by the application providing entity may be forwarded by the data collection application entity to the network device, so that the network device selects, from the first configuration, the configuration that is supported by the terminal device and that is used for the AS data collection.

In a possible design solution, the method provided in this embodiment of this application may further include: The network device determines a data collection capability that is in the data collection capability supported by the AS of the terminal device and that is capable of being sent to the data collection application entity or the application providing entity. According to this design solution, when an AS data collection capability of the terminal device is opened to a third party (for example, the data collection application entity or the application providing entity), the network device may manage and control the AS data collection capability that is opened by the terminal device to the third party, to improve communication reliability.

In a possible design solution, the method provided in this embodiment of this application may further include: The network device sends first feedback information to the data collection application entity. According to this design solution, after screening the first configuration, the network device may notify the data collection application entity of a screening result via the first feedback information. In this way, the data collection application entity further notifies the application providing entity of the screening result; in addition, the data collection application entity updates the first configuration based on the screening result, to obtain an AS data collection configuration suitable for the terminal device.

In a possible design solution, the method provided in this embodiment of this application may further include: The network device sends the first feedback information to the application providing entity through the data collection application entity. According to this design solution, after screening the first configuration, the network device may notify the application providing entity of the screening result through the data collection application entity, so that the application providing entity can determine specific configurations that can be performed by the terminal device and specific configurations that cannot be performed by the terminal device in the first configuration.

In a possible design solution, the network device is a data collection application entity, and the method provided in this embodiment of this application may further include: The network device sends first feedback information to the application providing entity. According to this design solution, a data collection application entity senses the data collection capability supported by the AS of the terminal device, to screen the first configuration that is delivered by the application providing entity and that is used by the terminal device to collect the AS data expected by the application providing entity, and notify the application providing entity of a screening result.

In a possible design solution, the first feedback information indicates a part or all of the configuration supported by the terminal device in the first configuration.

In a possible design solution, the first feedback information may include at least one of the following: the configuration that is supported by the terminal device and that is used for the AS data collection, a configuration that is not supported by the terminal device and that is used for the AS data collection, or a reason for the configuration that is not supported by the terminal device and that is used for the AS data.

In a possible design solution, the method provided in this embodiment of this application may further include: The network device sends a second configuration to the terminal device, where the second configuration is obtained by updating the first configuration based on the configuration that is supported by the terminal device and that is used for the AS data collection. According to the design solution, the data collection application entity may update the first configuration based on the screening result, to obtain an AS data collection configuration suitable for the terminal device, and deliver the configuration to the terminal device to collect AS data.

In a possible design solution, that the network device sends the second configuration to the terminal device may include: The network device sends the second configuration to the terminal device through the application providing entity.

In a possible design solution, the data collection capability supported by the AS of the terminal device includes: supporting or not supporting sending of AS data to an application layer of the terminal device.

In a possible design solution, the data collection capability supported by the AS of the terminal device includes: supporting sending of AS data to an application layer of the terminal device, and the data collection capability supported by the AS of the terminal device may further include at least one of the following: a type of AS data whose sending to the application layer of the terminal device is supported, a supported AS data format, or a supported object for obtaining AS data.

According to a second aspect, a communication method is provided. The method may be performed by a data collection application entity; may be performed by a part of the data collection application entity, for example, a processor, a chip, or a chip system of the data collection application entity; or may be implemented by a logical module or software that can implement all or some functions of the data collection application entity. An example in which the method is performed by the data collection application entity is used for description. The method includes: The data collection application entity receives a first configuration from an application providing entity, where the first configuration is used by a terminal device to collect AS data expected by the application providing entity. The data collection application entity receives first feedback information from a network device, where the first feedback information indicates a part or all of a configuration supported by the terminal device in the first configuration. The data collection application entity sends a second configuration to the terminal device, where the second configuration is obtained by updating the first configuration based on the first feedback information.

According to the communication method, the data collection application entity may update the first configuration based on the part or all of the configuration that is supported by the terminal device in the first configuration and that is fed back by the network device, so that the delivered configuration adapts to a data collection capability supported by an AS of the terminal device.

In a possible design solution, the first feedback information may include at least one of the following: a configuration that is supported by the terminal device and that is used for AS data collection, a configuration that is not supported by the terminal device and that is used for the AS data collection, or a reason for the configuration that is not supported by the terminal device and that is used for the AS data.

In a possible design solution, that the data collection application entity sends the second configuration to the terminal device may include: The data collection application entity sends the second configuration to the terminal device through the application providing entity.

According to a third aspect, a communication method is provided. The method may be performed by a network device, or may be performed by a part of the network device, for example, a processor, a chip, or a chip system of the network device; or may be implemented by a logical module or software that can implement all or some functions of the network device. An example in which the method is performed by the network device is used below for description. The method includes: The network device receives first capability information from a first terminal device, where the first capability information indicates a data collection capability supported by an access stratum AS of the first terminal device. The network device receives one or more groups of configurations from an application providing entity, where each group of the one or more groups of configurations is used by a terminal device to collect AS data expected by the application providing entity. The network device determines a second configuration from the one or more groups of configurations based on the first capability information, where the second configuration is a configuration that is supported by the first terminal device and that is used for AS data collection. The network device sends the second configuration to the first terminal device.

According to the communication method, the network device matches, based on the AS data collection capability reported by the terminal device and from the one or more groups of configurations delivered by the application providing entity, the configuration that can be performed based on the capability of the terminal device, and sends the configuration to the terminal device, to complete AS data collection.

In a possible design solution, that the network device receives the one or more configurations from the application providing entity may include: The network device receives the one or more groups of configurations from the application providing entity through a data collection application entity.

In a possible design solution, that the network device sends the second configuration to the first terminal device may include: The network device sends the second configuration to the first terminal device through the data collection application entity.

In a possible design solution, the method provided in this embodiment of this application may further include: The network device sends second feedback information to the data collection application entity, where the second feedback information indicates an AS data collection status corresponding to a configuration performed by the terminal device in the one or more groups of configurations.

In a possible design solution, the second feedback information may include at least one of the following: collected AS data, uncollected AS data, or a reason for the uncollected AS data.

In a possible design solution, the network device may be an access network device or an access and mobility management network element.

In a possible design solution, the data collection capability supported by the AS of the first terminal device includes: whether sending of AS data to an application layer of the first terminal device is supported.

In a possible design solution, the data collection capability supported by the AS of the first terminal device includes: sending of AS data to an application layer of the first terminal device is supported, and the data collection capability supported by the AS of the first terminal device further includes at least one of the following: a type of AS data whose sending to the application layer of the first terminal device is supported, a supported AS data format, or a supported object for obtaining AS data.

In a possible design solution, the method provided in this embodiment of this application may further include: The network device determines a data collection capability that is in the data collection capability supported by the AS of the first terminal device and that is capable of being sent to the data collection application entity or the application providing entity.

According to a fourth aspect, a communication method is provided. The method may be performed by an application providing entity, or may be performed by a part of the application providing entity, for example, a processor, a chip, or a chip system of the application providing entity; or may be implemented by a logical module or software that can implement all or some functions of the application providing entity. An example in which the method is performed by the application providing entity is used for description. The method includes: The application providing entity receives first capability information from a terminal device, where the first capability information indicates a data collection capability supported by an access stratum AS of the terminal device. The application providing entity determines a second configuration based on the first capability information, where the second configuration is a configuration that is supported by the terminal device and that is used for AS data collection. The application providing entity sends the second configuration to the terminal device.

According to the communication method, the application providing entity may directly configure the appropriate AS data collection configuration for the terminal device by sensing the AS data collection capability of the terminal device, to implement the AS data collection.

In a possible design solution, that the application providing entity sends the second configuration to the terminal device may include: The application providing entity sends the second configuration to the terminal device through a data collection application entity.

In a possible design solution, the data collection capability supported by the AS of the terminal device includes: supporting or not supporting sending of AS data to an application layer of the terminal device.

In a possible design solution, the data collection capability supported by the AS of the terminal device includes: supporting sending of AS data to an application layer of the terminal device, and the data collection capability supported by the AS of the terminal device may further include at least one of the following: a type of AS data whose sending to the application layer of the terminal device is supported, a supported AS data format, or a supported object for obtaining AS data.

According to a fifth aspect, a communication method is provided. The method may be performed by a terminal device, or may be performed by a part of the terminal device, for example, a processor, a chip, or a chip system of the terminal device; or may be implemented by a logical module or software that can implement all or some functions of the terminal device. An example in which the method is performed by the terminal device is used below for description. The method includes: sending first capability information, where the first capability information indicates a data collection capability supported by an access stratum AS of a terminal device; and receiving a second configuration, where the second configuration is a configuration that is supported by the terminal device and that is used for AS data collection, and the second configuration is determined based on the first capability information.

In a possible design solution, the sending the first capability information may include: sending the first capability information to an access network device or an access and mobility management network element.

In a possible design solution, the sending the first capability information may include: sending the first capability information to a data collection application entity.

In a possible design solution, the sending the first capability information may include: sending the first capability information to an application providing entity.

In a possible design solution, the receiving the second configuration may include: receiving the second configuration from the application providing entity.

In a possible design solution, the receiving the second configuration may include: receiving the second configuration from the data collection application entity.

In a possible design solution, the data collection capability supported by the AS of the terminal device includes: supporting or not supporting sending of AS data to an application layer of the terminal device.

In a possible design solution, the data collection capability supported by the AS of the terminal device includes: supporting sending of AS data to an application layer of the terminal device, and the data collection capability supported by the AS of the terminal device may further include at least one of the following: a type of AS data whose sending to the application layer of the terminal device is supported, a supported AS data format, or a supported object for obtaining AS data.

For technical effects of the method according to the fifth aspect, refer to the technical effects of the method according to any one of the first aspect to the fourth aspect. Details are not described herein again.

According to a sixth aspect, a communication apparatus is provided, to implement the foregoing methods. The communication apparatus may be the network device according to the first aspect, an apparatus including the network device, or an apparatus, for example, a chip, included in the network device. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive first capability information from a terminal device, where the first capability information indicates a data collection capability supported by an access stratum AS of the terminal device. The transceiver module is further configured to receive a first configuration from an application providing entity, where the first configuration is used by the terminal device to collect AS data expected by the application providing entity. The processing module is configured to determine, from the first configuration based on the first capability information, a configuration that is supported by the terminal device and that is used for AS data collection.

In a possible design solution, the communication apparatus is an access network device or an access and mobility management network element; and that the transceiver module is configured to receive the first configuration from the application providing entity may include: The transceiver module is configured to receive the first configuration from the application providing entity through a data collection application entity.

In a possible design solution, the processing module is further configured to determine a data collection capability that is in the data collection capability supported by the AS of the terminal device and that is capable of being sent to the data collection application entity or the application providing entity.

In a possible design solution, the transceiver module is further configured to send first feedback information to the data collection application entity.

In a possible design solution, the transceiver module is further configured to send the first feedback information to the application providing entity through the data collection application entity.

In a possible design solution, the communication apparatus is a data collection application entity, and the transceiver module is further configured to send first feedback information to the application providing entity.

In a possible design solution, the first feedback information indicates a part or all of the configuration supported by the terminal device in the first configuration.

In a possible design solution, the first feedback information may include at least one of the following: the configuration that is supported by the terminal device and that is used for the AS data collection, a configuration that is not supported by the terminal device and that is used for the AS data collection, or a reason for the configuration that is not supported by the terminal device and that is used for the AS data.

In a possible design solution, the transceiver module is further configured to send a second configuration to the terminal device, where the second configuration is obtained by updating the first configuration based on the configuration that is supported by the terminal device and that is used for the AS data collection.

In a possible design solution, that the transceiver module is further configured to send the second configuration to the terminal device may include: The transceiver module is further configured to send the second configuration to the terminal device through the application providing entity.

In a possible design solution, the data collection capability supported by the AS of the terminal device includes: supporting or not supporting sending of AS data to an application layer of the terminal device.

In a possible design solution, the data collection capability supported by the AS of the terminal device includes: supporting sending of AS data to an application layer of the terminal device, and the data collection capability supported by the AS of the terminal device may further include at least one of the following: a type of AS data whose sending to the application layer of the terminal device is supported, a supported AS data format, or a supported object for obtaining AS data.

For technical effects of the communication apparatus according to the sixth aspect, refer to the technical effects of the method according to the first aspect. Details are not described herein again.

According to a seventh aspect, a communication apparatus is provided, to implement the foregoing methods. The communication apparatus may be the data collection application entity according to the second aspect, an apparatus including the data collection application entity, or an apparatus, for example, a chip, included in the data collection application entity. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control the transceiver module to receive a first configuration from an application providing entity, where the first configuration is used by a terminal device to collect AS data expected by the application providing entity. The processing module is further configured to control the transceiver module to receive first feedback information from a network device, where the first feedback information indicates a part or all of a configuration supported by the terminal device in the first configuration. The processing module is further configured to control the transceiver module to send a second configuration to the terminal device, where the second configuration is obtained by updating the first configuration based on the first feedback information.

In a possible design solution, the first feedback information may include at least one of the following: a configuration that is supported by the terminal device and that is used for AS data collection, a configuration that is not supported by the terminal device and that is used for the AS data collection, or a reason for the configuration that is not supported by the terminal device and that is used for the AS data.

In a possible design solution, that the processing module is further configured to control the transceiver module to send the second configuration to the terminal device may include: The processing module is further configured to control the transceiver module to send the second configuration to the terminal device through the application providing entity.

For technical effects of the communication apparatus according to the seventh aspect, refer to the technical effects of the method according to the second aspect. Details are not described herein again.

According to an eighth aspect, a communication apparatus is provided, to implement the foregoing methods. The communication apparatus may be the network device according to the third aspect, an apparatus including the network device, or an apparatus, for example, a chip, included in the network device. The communication apparatus includes a corresponding module, unit, or means (means) for implementing the method according to the third aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive first capability information from a first terminal device, where the first capability information indicates a data collection capability supported by an access stratum AS of the first terminal device. The transceiver module is further configured to receive one or more groups of configurations from an application providing entity, where each group of the one or more groups of configurations is used by a terminal device to collect AS data expected by the application providing entity. The processing module is configured to determine a second configuration from the one or more groups of configurations based on the first capability information, where the second configuration is a configuration that is supported by the first terminal device and that is used for AS data collection. The transceiver module is further configured to send the second configuration to the first terminal device.

In a possible design solution, that the transceiver module is further configured to receive the one or more configurations from the application providing entity may include: The transceiver module is further configured to receive the one or more groups of configurations from the application providing entity through a data collection application entity.

In a possible design solution, that the transceiver module is further configured to send the second configuration to the first terminal device may include: The transceiver module is further configured to send the second configuration to the first terminal device through the data collection application entity.

In a possible design solution, the transceiver module is further configured to send second feedback information to the data collection application entity, where the second feedback information indicates an AS data collection status corresponding to a configuration performed by the terminal device in the one or more groups of configurations.

In a possible design solution, the second feedback information may include at least one of the following: collected AS data, uncollected AS data, or a reason for the uncollected AS data.

In a possible design solution, the network device may be an access network device or an access and mobility management network element.

In a possible design solution, the data collection capability supported by the AS of the first terminal device includes: whether sending of AS data to an application layer of the first terminal device is supported.

In a possible design solution, the data collection capability supported by the AS of the first terminal device includes: sending of AS data to an application layer of the first terminal device is supported, and the data collection capability supported by the AS of the first terminal device further includes at least one of the following: a type of AS data whose sending to the application layer of the first terminal device is supported, a supported AS data format, or a supported object for obtaining AS data.

In a possible design solution, the processing module is further configured to determine a data collection capability that is in the data collection capability supported by the AS of the first terminal device and that is capable of being sent to the data collection application entity or the application providing entity.

For technical effects of the communication apparatus according to the eighth aspect, refer to the technical effects of the method according to the third aspect. Details are not described herein again.

According to a ninth aspect, a communication apparatus is provided, to implement the foregoing methods. The communication apparatus may be the application providing entity according to the fourth aspect, an apparatus including the application providing entity, or an apparatus, for example, a chip, included in the application providing entity. The communication apparatus includes a corresponding module, unit, or means (means) for implementing the method according to the fourth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive first capability information from a terminal device, where the first capability information indicates a data collection capability supported by an access stratum AS of the terminal device. The processing module is configured to determine a second configuration based on the first capability information, where the second configuration is a configuration that is supported by the terminal device and that is used for AS data collection. The transceiver module is further configured to send the second configuration to the terminal device.

In a possible design solution, that the transceiver module is further configured to send the second configuration to the terminal device may include: The transceiver module is further configured to send the second configuration to the terminal device through a data collection application entity.

In a possible design solution, the data collection capability supported by the AS of the terminal device includes: supporting or not supporting sending of AS data to an application layer of the terminal device.

In a possible design solution, the data collection capability supported by the AS of the terminal device includes: supporting sending of AS data to an application layer of the terminal device, and the data collection capability supported by the AS of the terminal device may further include at least one of the following: a type of AS data whose sending to the application layer of the terminal device is supported, a supported AS data format, or a supported object for obtaining AS data.

For technical effects of the communication apparatus according to the ninth aspect, refer to the technical effects of the method according to the fourth aspect. Details are not described herein again.

According to a tenth aspect, a communication apparatus is provided, to implement the foregoing methods. The communication apparatus may be the terminal device according to the fifth aspect, an apparatus including the terminal device, or an apparatus, for example, a chip, included in the terminal device. The communication apparatus includes a corresponding module, unit, or means (means) for implementing the method according to the fifth aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control the transceiver module to send first capability information, where the first capability information indicates a data collection capability supported by an access stratum AS of a terminal device. The processing module is further configured to control the transceiver module to receive a second configuration, where the second configuration is a configuration that is supported by the terminal device and that is used for AS data collection, and the second configuration is determined based on the first capability information.

In a possible design solution, that the processing module is configured to control the transceiver module to send the first capability information may include: The processing module is configured to control the transceiver module to send the first capability information to an access network device or an access and mobility management network element.

In a possible design solution, that the processing module is configured to control the transceiver module to send the first capability information may include: The processing module is configured to control the transceiver module to send the first capability information to a data collection application entity.

In a possible design solution, that the processing module is further configured to control the transceiver module to send the first capability information may include: The processing module is further configured to control the transceiver module to send the first capability information to an application providing entity.

In a possible design solution, that the processing module is further configured to control the transceiver module to receive the second configuration may include: The processing module is further configured to control the transceiver module to receive the second configuration from the application providing entity.

In a possible design solution, that the processing module is further configured to control the transceiver module to receive the second configuration may include: The processing module is further configured to control the transceiver module to receive the second configuration from the data collection application entity.

In a possible design solution, the data collection capability supported by the AS of the terminal device includes: supporting or not supporting sending of AS data to an application layer of the terminal device.

In a possible design solution, the data collection capability supported by the AS of the terminal device includes: supporting sending of AS data to an application layer of the terminal device, and the data collection capability supported by the AS of the terminal device may further include at least one of the following: a type of AS data whose sending to the application layer of the terminal device is supported, a supported AS data format, or a supported object for obtaining AS data.

In addition, for technical effects of the communication apparatus according to the tenth aspect, refer to the technical effects of the method according to the fifth aspect. Details are not described herein again.

With reference to any one of the sixth aspect to the tenth aspect, in a possible design solution, the transceiver module may include a receiving module and a sending module. The sending module is configured to implement a sending function of the communication apparatus according to any one of the sixth aspect to the tenth aspect, and the receiving module is configured to implement a receiving function of the communication apparatus according to any one of the sixth aspect to the tenth aspect.

With reference to any one of the sixth aspect to the tenth aspect, in a possible design solution, the communication apparatus according to any one of the sixth aspect to the tenth aspect may further include a storage module, and the storage module stores a program or instructions. When the processing module executes the program or the instructions, the communication apparatus according to any one of the sixth aspect to the tenth aspect can perform the method according to any one of the first aspect to the fifth aspect.

For technical effects of the communication apparatus according to any one of the sixth aspect to the tenth aspect, refer to the technical effects of the method according to any one of the first aspect to the fifth aspect. Details are not described herein again.

According to an eleventh aspect, a communication apparatus is provided. The apparatus includes a processor and a communication interface. The communication interface is configured to communicate with a module other than the communication apparatus. The processor is configured to execute a computer program or instructions, to cause the communication apparatus to perform the method according to any one of the first aspect to the fifth aspect.

According to a twelfth aspect, a communication apparatus is provided (for example, the communication apparatus may be a chip or a chip system). The communication apparatus includes a processor, configured to implement a function according to any one of the first aspect to the fifth aspect.

In some possible designs, the communication apparatus includes a memory. The memory is configured to store necessary program instructions and/or data.

In a possible design solution, the processor may be integrated with the memory.

In some possible designs, when the communication apparatus is a chip system, the communication apparatus may include a chip, or may include a chip and another discrete device.

According to a thirteenth aspect, a communication apparatus is provided. The apparatus includes a transceiver and a processor. The transceiver is configured to exchange information between the communication apparatus and another communication apparatus, and the processor executes program instructions to perform the method according to any one of the first aspect to the fifth aspect.

In a possible design solution, the communication apparatus according to the thirteenth aspect may further include a memory. The memory and the processor may be integrated together, or may be disposed separately. The memory may be configured to store a computer program and/or data in the method according to any one of the first aspect to the fifth aspect.

It should be understood that the eleventh aspect to the thirteenth aspect include a corresponding module, unit, or means (means) for implementing the method according to any one of the first aspect to the fifth aspect. The module, unit, or means may be implemented by hardware, software, or hardware executing corresponding software. The hardware or the software includes one or more modules or units configured to perform a function in the foregoing method.

It may be understood that, when the communication apparatus according to any one of the eleventh aspect to the thirteenth aspect is a chip, the sending action/function may be understood as outputting, and the receiving action/function may be understood as inputting.

According to a fourteenth aspect, a computer-readable storage medium is provided. The computer-readable storage medium stores a computer program or instructions. When the computer program or the instructions are run on a communication apparatus, the communication apparatus is caused to perform the method according to any one of the first aspect to the fifth aspect.

According to a fifteenth aspect, a computer program product including instructions is provided. When the computer program product runs on a communication apparatus, the communication apparatus is caused to perform the method according to any one of the first aspect to the fifth aspect.

According to a sixteenth aspect, a communication system is provided. The system includes the network device configured to perform the method according to the first aspect and the terminal device configured to perform the method according to the fifth aspect; includes the network device configured to perform the method according to the first aspect, the data collection application entity configured to perform the method according to the second aspect, and the terminal device configured to perform the method according to the fifth aspect; includes the network device configured to perform the method according to the third aspect and the terminal device configured to perform the method according to the fifth aspect; or includes the application providing entity configured to perform the method according to the fourth aspect and the terminal device configured to perform the method according to the fifth aspect.

### BRIEF DESCRIPTION OF DRAWINGS

FIG. 1 is a diagram of an architecture of an EVEX data collection architecture according to an embodiment of this application;
FIG. 2 is a diagram of an architecture of an AI application framework in NR according to an embodiment of this application;
FIG. 3 is a diagram of an architecture of another AI application framework according to an embodiment of this application;
FIG. 4 is a schematic flowchart of an overall signaling procedure of LCM of an AI model according to an embodiment of this application;
FIG. 5 is a diagram of an architecture of a communication system according to an embodiment of this application;
FIG. 6 is a diagram of an architecture of AI model distribution according to an embodiment of this application;
FIG. 7 is a diagram of an architecture of a 5G system according to an embodiment of this application;
FIG. 8 is a schematic flowchart of a communication method according to an embodiment of this application;
FIG. 9 is a schematic flowchart of another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

To better understand embodiments of this application, the following first describes a system architecture in embodiments of this application.

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system like a long term evolution (long term evolution, LTE) system or a worldwide interoperability for microwave access (worldwide interoperability for microwave access, WiMAX) communication system, a 5th generation (5th generation, 5G) mobile communication system like a new radio (new radio, NR) system, and a future communication system like a 6th generation (6th generation, 6G) mobile communication system.

The following describes related technologies in embodiments of this application.

### 1. EVEX data collection architecture

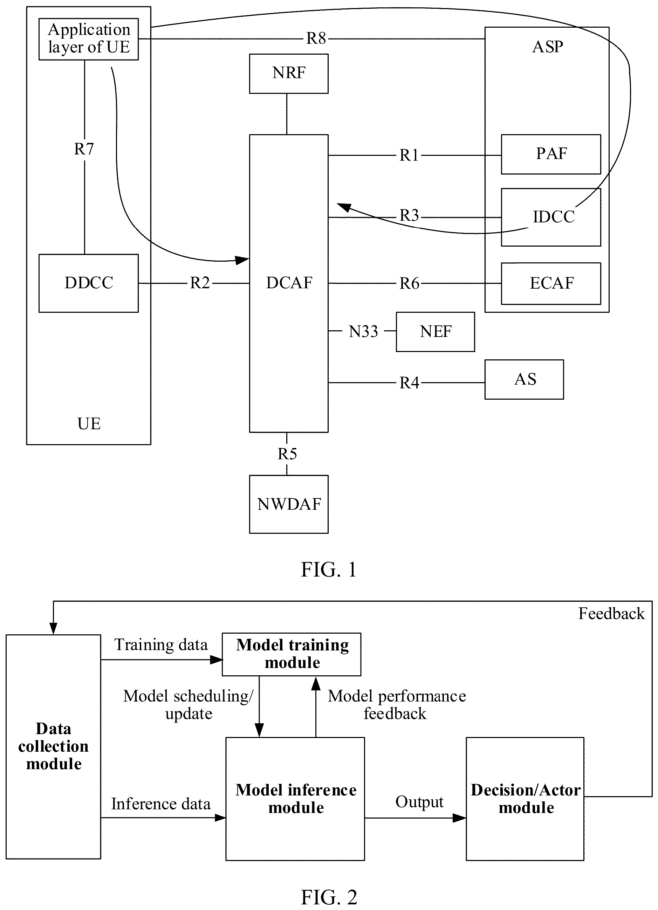

The EVEX data collection architecture is an architecture used to collect application (application, APP) layer data or non-access stratum data of UE, for example, collect data such as some media streaming data and quality of experience (quality of experience, QoE) indicators of the media streaming data. As shown in FIG. 1, the EVEX data collection architecture mainly includes UE, a DCAF, and an application service provider (application service provider, ASP). The UE includes a DDCC module and an application layer module. The DDCC module and the application layer module communicate with each other through an R7 interface, and the DDCC module and the DCAF communicate with each other through an R2 interface.

The ASP includes a (configuration) provisioning application function (provisioning application function, PAF) module, an IDCC module, and an event consumer application function (event consumer AF, ECAF) module. The PAF module and the DCAF communicate with each other through an R1 interface, the IDCC module and the DCAF communicate with each other through an R3 interface, and the ECAF module and the DCAF communicate with each other through an R6 interface.

The PAF module sends a data collection/processing and event exposure (event exposure) configuration to the DCAF through the R1 interface. The DACF may send a data collection and reporting configuration to a corresponding entity (entity), and the corresponding entity reports collected data based on the configuration. For example, the DACF sends a data collection and reporting configuration to the DDCC module through the R2 interface, so that the application layer module of the UE may be configured to report collected application layer data. The application layer data collected by the application layer module of the UE may be sent to the DCAF directly (for example, through R7 to R2), or may be sent to the DCAF indirectly (for example, through R8 to R3). The DCAF processes the collected data based on an event identification (identification, ID) request, and opens the collected data to a subscriber based on an event ID. For example, the ASP or a network data analytics function (network data analytics function, NWDAF) indicates, to the DCAF, an event ID corresponding to data that needs to be collected, and the DCAF sends the corresponding collected data to the ASP or the NWDAF based on the event ID, where the NWDAF and the DCAF communicate with each other through an R5 interface.

### 2. Artificial intelligence (artificial intelligence, AI)

The AI may be applied to NR to intelligently collect and analyze data, so that network performance and user experience are improved. As shown in FIG. 2, an AI application framework in NR may include the following modules:
a data collection (data collection) module, configured to collect and store data from a next generation NodeB (next generation NodeB, gNB), gNB-central unit (central unit, CU), gNB-distributed unit (distributed unit, DU), UE, or another management entity, as a database for AI model training and data analysis and inference; a model training (model training) module, which analyzes training data (training data) provided by the data collection module to provide an optimal AI model; a model inference (model inference) module, which provides an AI-based reasonable prediction for network running or guide a network to make a policy adjustment, by using the AI model based on inference data (inference data) provided by the data collection module; and a decision/actor (actor) module performs a related policy adjustment output by the model inference module, and feeds back, to the data collection module for storage, specific performance (such as various performance parameters) of the network after a related policy is applied.

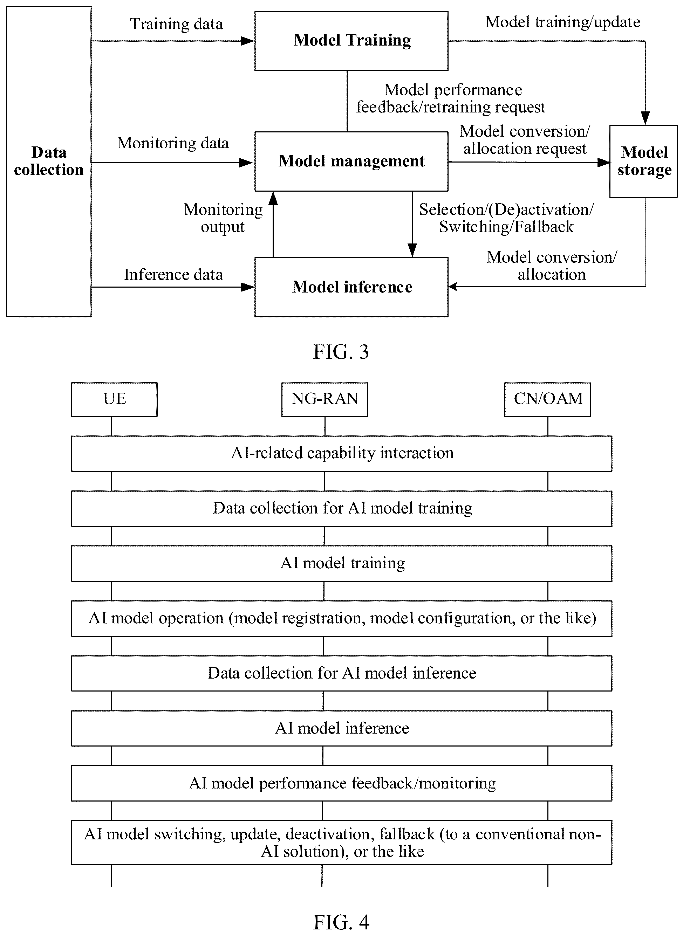

FIG. 3 is a diagram of another AI application communication. A difference from FIG. 2 lies in that, in addition to the data collection module, the model training module, and the model inference module, an AI application communication framework shown in FIG. 3 further includes a model management (model management) module and a model storage (model storage) module, which are respectively configured to perform AI model management and storage. In addition, in the AI application communication framework shown in FIG. 3, data collected by the data collection module may be used by the module training module, the model inference module, and the model management module.

Currently, the following three application scenarios (use cases) of AI technologies are mainly studied in RAN1:
(1) channel state information (channel state information, CSI) feedback enhancement (feedback enhancement);
(2) beam management (beam management, BM); and
(3) positioning accuracy enhancement (positioning accuracy enhancement).

In addition, lifecycle management (lifecycle management, LCM) of an AI model is management of an entire process from start to end of the AI model. For example, in a communication system, an overall signaling procedure of LCM of an AI model between UE, a RAN, and a core network (core network, CN) or an operation, administration and maintenance (operation, administration and maintenance, OAM) (which may be referred to as a network management system) is shown in FIG. 4, and includes processing procedures such as AI-related capability interaction, data collection for AI model training, AI model training, an AI model operation, data collection for AI model inference, AI model inference, AI model performance feedback/monitoring, and AI model switching/update/deactivation/fallback.

For the foregoing AI application scenarios, input data of an AI model is AS data. For example, in a CSI compression scenario, input of a model is a channel state information reference signal (channel state information reference signal, CSI-RS) measurement result, and is related to access stratum CSI reporting. If AS data of UE needs to be collected based on an EVEX data collection architecture, an ASP needs to send configuration information of AS data collection based on an AS capability of the UE. However, a capability of the UE, for example, an AS data collection capability, is usually reported only to a RAN or an access and mobility management function (access and mobility management function, AMF), and the ASP cannot sense the AS data collection capability of the UE. Therefore, how to collect AS data of UE based on an EVEX data collection architecture becomes an urgent problem to be resolved.

To better understand embodiments of this application, the following descriptions are provided before embodiments of this application are described.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of each piece of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. The configuration information may include, for example, but not limited to one or a combination of at least two of radio resource control (radio resource control, RRC) signaling, medium access control (medium access control, MAC) layer signaling, and physical layer signaling. The MAC layer signaling includes, for example, a MAC-control element (control element, CE), and the physical (physical, PHY) layer signaling includes, for example, DCI.

Second, numbers such as first and second in embodiments of this application are merely for differentiation for ease of description, and are not intended to limit the scope of embodiments of this application, for example, for distinguishing between different indication information. For another example, first indication information and second indication information are merely for distinguishing between different areas, and a sequence of the first indication information and the second indication information is not limited. A person skilled in the art may understand that the terms such as "first" and "second" do not limit a quantity or an execution sequence, and the terms such as "first" and "second" do not indicate a definite difference.

Third, in embodiments of this application, descriptions such as "when...", "in a case in which...", "if", and "assuming" mean that a device (for example, a terminal device or a network device) performs corresponding processing in an objective situation, and are not intended to limit time, and the device (for example, the terminal device or the network device) is not required to perform a determining action during implementation; and do not mean any other limitation.

In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

Finally, a network architecture and a service scenario that are described in embodiments of this application are intended to describe the technical solutions in embodiments of this application more clearly, and do not constitute any limitation on the technical solutions provided in embodiments of this application. A person of ordinary skill in the art can know that as the network architecture evolves and a new service scenario emerges, the technical solutions provided in embodiments of this application are also applicable to a similar technical problem.

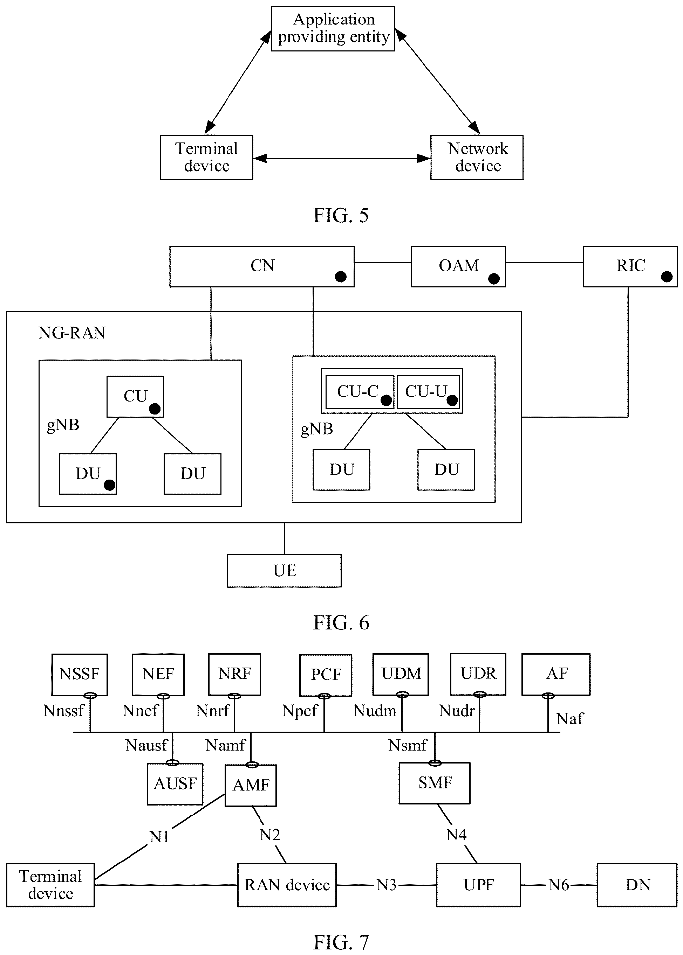

For example, FIG. 5 is a diagram of an architecture of a communication system to which a communication method according to an embodiment of this application is applicable. As shown in FIG. 5, the communication system includes a terminal device, a network device, and an application providing entity, and each two of the three may communicate with each other. In embodiments of this application, the network device may be an access network device, a core network device (for example, an access and mobility management network element), or a data collection application entity.

### 1. Terminal device

There may be one or more terminal devices, for example, a first terminal device, a second terminal device, and a third terminal device. The terminal device may be a terminal device having a transceiver function, or may be a chip or a chip system disposed in the terminal device. The terminal device may also be referred to as UE, an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or a meter), an intelligent robot, a robot arm, workshop equipment, a wireless terminal in self-driving, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, a flight device (for example, an intelligent robot, a hot air balloon, an uncrewed aerial vehicle, or an airplane), or the like. The terminal device in this application may alternatively be a vehicle-mounted module, a vehicle-mounted assembly, a vehicle-mounted part, a vehicle-mounted chip, or a vehicle-mounted unit that is built in a vehicle as one or more parts or units. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal device may be a terminal device, or may be an apparatus, for example, a chip system, that can support the terminal device in implementing the function. The apparatus may be mounted in the terminal device or used together with the terminal device. In embodiments of this application, the chip system may include a chip, or may include a chip and another discrete device.

### 2. Access network device

There may be a plurality of access network devices, for example, a first access network device, a second access network device, and a third access network device. The access network device may also be referred to as an access network node, a RAN node, a RAN entity, an access node, or the like, is located on a network side of the foregoing communication system, is configured to help the terminal device implement wireless access, and is a device that has a wireless transceiver function or may be disposed in a chip or a chip system of the device. The access network device includes but is not limited to a base station (base station), an evolved NodeB (evolved NodeB, eNodeB), an access point (access point, AP), a TRP or a transmission point (transmission point, TP), a gNB, a next generation base station in a 6G mobile communication system, a base station in a future mobile communication system, an access node in a Wi-Fi system, or the like. The access network device may be a macro base station, a micro base station, an indoor base station, a relay node, a donor node, or a radio controller in a centralized radio access network (centralized radio access network, CRAN) scenario. Alternatively, the access network device may be one or a group (including a plurality of antenna panels) of antenna panels of a base station in 5G; or may be a network node that forms a gNB, a TRP, a TP, a transmission measurement function (transmission measurement function, TMF), for example, a central unit (central unit, CU), a DU, a CU-control plane (control plane, CP), a CU-user plane (user plane, UP), or a radio unit (radio unit, RU); or a road side unit (road side unit, RSU) having a base station function. Optionally, the access network device may alternatively be a server, a wearable device, a vehicle, a vehicle-mounted device, or the like. For example, an access network device in a V2X technology may be an RSU. All or some functions of the network device in this application may alternatively be implemented by a software function running on hardware, or implemented by a virtualized function instantiated on a platform (for example, a cloud platform). The access network device in this application may alternatively be a logical node, a logical module, or software that can implement all or some of the functions of the access network device.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified as a network device in an access network RAN, or the CU may be classified as a network device in a CN. This is not limited herein.

In different systems, the CU (or the CU-CP and the CU-UP), the DU, or the RU may alternatively have different names, but a person skilled in the art may understand meanings thereof. For example, in an open-RAN (open-RAN, O-RAN) system, the CU may also be referred to as an O-CU (open-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of a software module and a hardware module.

In embodiments of this application, a form of the access network device is not limited. An apparatus configured to implement a function of the access network device may be an access network device, or may be an apparatus, for example, a chip system, that can support the access network device in implementing the function. The apparatus may be mounted in the access network device or used together with the access network device.

### 3. Core network device

The core network device is an apparatus that is deployed in a core network and that is configured to serve the terminal device. In systems using different radio access technologies, core network devices having similar wireless communication functions may have different names. In embodiments of this application, the core network device may be an access and mobility management network element. For example, when the method in embodiments of this application is applied to a 5G system, the access and mobility management network element may be an AMF. When the method in embodiments of this application is applied to an LTE system, the access and mobility management network element may be a mobility management entity (mobility management entity, MME). For ease of description only, in embodiments of this application, the foregoing apparatuses that can serve the terminal device are collectively referred to as core network devices.

### 4. Application providing entity

The application providing entity is deployed at an application layer, and is configured to provide an application service for the terminal device. The application providing entity may include a configuration provisioning application module, an indirect data collection module, and an event use module. The configuration provisioning application module is configured to deliver data collection configuration information to the terminal device, the indirect data collection module is configured to forward collected data from the terminal device, and the event use module completes event processing by using the collected data. In embodiments of this application, the application providing entity may be an ASP. Correspondingly, the configuration provisioning application module may be a PAF, the indirect data collection module may be an IDCC, and the event use module may be an ECAF.

### 5. Data collection application entity

The data collection application entity is deployed at the application layer, and is configured to: collect data of an application layer, an access stratum, and the like of the terminal device, and open the collected data to the access network device, the application providing entity, and the like. In embodiments of this application, the data collection application entity may be a DCAF.

In embodiments of this application, an AI module may also be deployed in the terminal device, the network device, or the application providing entity, and the AI module is a module having a machine learning computing capability. When the AI module is deployed in a communication device or a communication apparatus, the communication device or the communication apparatus may perform, based on the AI model, processing such as model training and model inference shown in FIG. 2 or FIG. 3. When the method in embodiments of this application is applied to a 5G system, as shown in FIG. 6, the AI module is located in an OAM, may be located in a RAN device (is located in a CU/DU when the RAN device is of a split architecture), may be located in some terminal devices, or may be independently a network element entity RAN intelligent controller (RAN intelligent controller, RIC) module. A main function of the AI module in a wireless communication system is to perform a series of AI computing such as model establishment, training approximation, and reinforcement learning based on input data (in the wireless communication system, the input data is usually network running data, for example, network load and channel quality, provided by a RAN side or monitored by the OAM). A trained model provided by the AI module has a prediction function for a network change on the RAN side, and may be usually used for load prediction, UE track prediction, CSI prediction, optimal beam prediction, positioning prediction, and the like. In addition, the AI module may further perform policy inference from perspectives of network energy saving, mobility optimization, and the like based on a result of predicting RAN network performance by the trained model, to obtain a reasonable and efficient energy saving policy, mobility optimization policy, and the like. When the AI module is located in an OAM, a current northbound interface may be reused for communication between the AI module and a gNB on the RAN side. When the AI module is located in a gNB or a CU, a current interface like F1, Xn, or Uu may be reused. When the AI module is an independent network entity, a communication link to the OAM, the RAN side, or the like needs to be re-established, for example, a wired link or a wireless link.

Further, FIG. 7 is a diagram of an architecture of a 5G system usable in the foregoing communication system according to an embodiment of this application. As shown in FIG. 7, the 5G system includes a terminal device, an access network (access network, AN), and a CN.

The foregoing AN is configured to implement an access-related function, may provide a network access function for an authorized user in a specific area, and can determine transmission links with different quality based on a user level, a service requirement, and the like, to perform transmission of user data. The AN forwards a control signal and the user data between the terminal device and the CN. The AN may include an access network device, or may be referred to as a RAN device.

The CN is mainly responsible for maintaining subscription data of a mobile network, and provides functions such as session management, mobility management, policy management, and security authentication for the terminal device. The CN mainly includes the following network elements: a user plane function (user plane function, UPF), an authentication server function (authentication server function, AUSF), an AMF, a session management function (session management function, SMF), a network slice selection function (network slice selection function, NSSF), a network exposure function (network exposure function, NEF), a network repository function (network repository function, NRF), a policy control function (policy control function, PCF), a unified data management (unified data management, UDM), a unified data repository (unified data repository, UDR), and an application function (application function, AF).

As shown in FIG. 7, the terminal device accesses the 5G network through the RAN device; the terminal device communicates with the AMF through an N1 interface (N1 for short); the RAN device communicates with the AMF through an N2 interface (N2 for short); the RAN device communicates with the UPF through an N3 interface (N3 for short); the SMF communicates with the UPF through an N4 interface (N4 for short); and the UPF accesses a data network (data network, DN) through an N6 interface (N6 for short).

It should be understood that, in embodiments of this application, names of nodes, modules, devices, or network elements in different scenarios, architectures, or systems, and names of communication interfaces between any two of the nodes, modules, devices, or network elements are provided as examples, and a possibility of a name change in a future communication system, scenario, or architecture is not excluded.

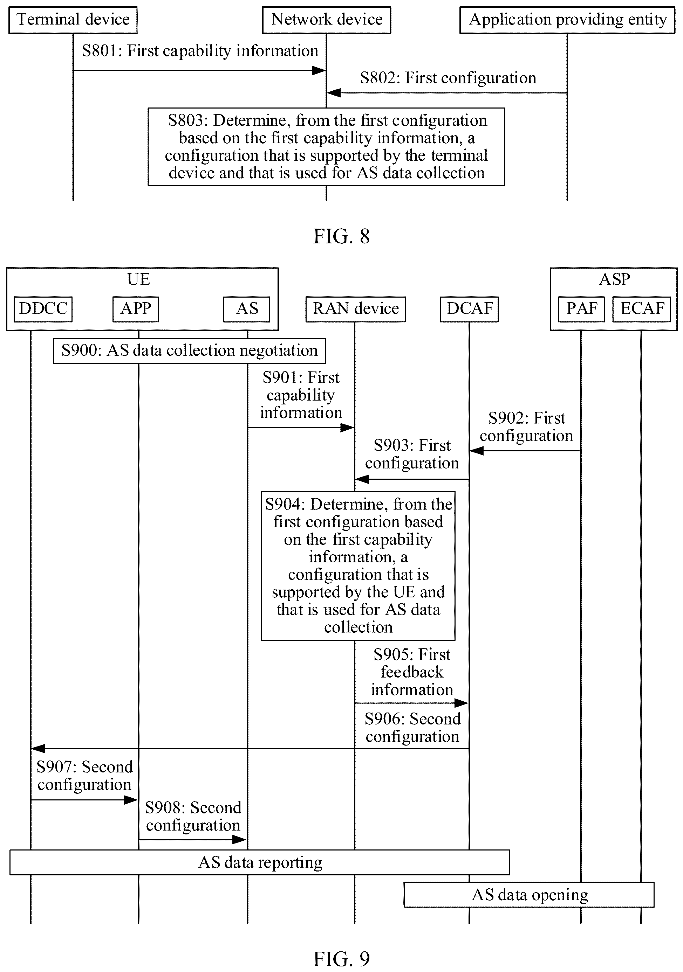

The following describes in detail the communication method provided in embodiments of this application with reference to FIG. 8 to FIG. 11.

For example, FIG. 8 is a schematic flowchart of a communication method according to an embodiment of this application. The communication method may be for communication between a terminal device and a network device.

In embodiments of this application, a terminal device that performs a method embodiment may be the terminal device itself, or may be a part of the terminal device, for example, a processor, a chip, or a chip system of the terminal device; or may be implemented by a logical module or software that implements all or some functions related to the terminal device. In the following method embodiments, an example in which the method embodiment is performed by the terminal device is used for description. In embodiments of this application, a network device that performs a method embodiment may be the network device itself, or may be a part of the network device, for example, a processor, a chip, or a chip system of the network device; or may be implemented by a logical module or software that implements all or some functions related to the network device. In the following method embodiments, an example in which the method embodiment is performed by the network device is used below for description. As shown in FIG. 8, the communication method includes the following steps.

S801: The terminal device sends first capability information to the network device. Correspondingly, the network device receives the first capability information from the terminal device.

The first capability information indicates a data collection capability supported by an AS of the terminal device (which may be referred to as an AS data collection capability for short). In embodiments of this application, the first capability information reported by the terminal device may include all of data collection capabilities that are possessed or supported by the AS of the terminal device, or may include some of the data collection capabilities that are possessed or supported by the AS of the terminal device. Specific data collection capabilities to be reported are related to an application scenario, an object for obtaining the data collection capability, and the like.

The AS data collection capability includes: supporting or not supporting sending of AS data to an application layer of the terminal device. In other words, whether the AS of the terminal device supports sending of the AS data to the application layer (APP layer) of the terminal device. Usually, the AS and the APP of the terminal device may determine, through negotiation, that the AS of the terminal device can send data to the APP of the terminal device, or that AS data can be transmitted between the AS and the APP of the terminal device by default.

On this basis, the AS data collection capability may further include at least one of the following: a type of AS data whose sending to the application layer of the terminal device is supported, a supported AS data format, or a supported object for obtaining AS data. The type of AS data whose sending to the application layer of the terminal device is supported may be: AS data, in one or more application scenarios (for example, an AI application scenario like CSI feedback enhancement, beam management, or positioning accuracy enhancement), that can be sent by the AS of the terminal device to the application layer of the terminal device, or types of AS data that can be sent by the AS of the terminal device to the application layer of the terminal device. The supported object for obtaining AS data may be: a supported object to which the AS data opens, or a supported object for receiving the AS data. For example, a direct data collection module (for example, the DDCC in FIG. 1) of the terminal device is supported in AS data sending and reception, an indirect data collection module (for example, the IDCC in FIG. 1) of an application providing entity is supported in AS data sending and reception, and a data collection application entity or the application providing entity is supported in AS data obtaining. It should be understood that the foregoing provides several examples of data collection capabilities supported by the AS of the terminal device. This is not limited in embodiments of this application.

In embodiments of this application, the AS data may include but is not limited to the following types: channel measurement data, layer (layer, L) 1-reference signal received power (reference signal received power, RSRP), positioning reference signal (positioning reference signal, PRS) measurement data, sounding reference signal (sounding reference signal, SRS) measurement data, channel impulse response (channel impulse response, CIR)/channel frequency domain response (channel frequency response, CFR) data, channel power delay profile (power delay profile, PDP), model performance monitoring indicator data, or tag data. For example, the channel measurement data includes at least one of some original channel measurement data or data obtained by processing the original channel measurement data, for example, an original channel matrix measured based on a CSI-RS, or eigenvector data obtained by decomposing the original channel matrix. For example, the model performance monitoring indicator data includes one or more of a channel prediction accuracy rate, a top-k beam prediction accuracy rate, a positioning accuracy rate, and a line of sight (line of sight, LOS)/non line of sight (non line of sight, NLOS) identification accuracy rate. For example, the label data includes one or more of a channel truth value, an optimal beam truth value, a location truth value of the terminal device, and a LOS/NOLS status truth value.

In a possible design solution, the network device may be an access network device or an access and mobility management network element. For example, the access network device may be the RAN device in FIG. 7, and the access and mobility management network element may be the AMF in FIG. 7. When the network device is the access and mobility management network element, the terminal device may send the first capability information to the access and mobility management network element through an access network device, or may directly send the first capability information to the access and mobility management network element. This is not limited herein.

In a possible design solution, the network device may be a data collection application entity. For example, the data collection application entity is the DCAF in FIG. 1. In this design solution, the first capability information is authenticated based on an access network device or an access and mobility management network element. To be specific, when the terminal device sends data collection capability information to the data collection application entity, the access network device or the access and mobility management network element may manage and control the data collection capability information that the terminal device opens or exposes (exposure) to the data collection application entity, for example, whether the AS data collection capability of the terminal device can be opened to the data collection application entity, and specific AS data collection capabilities that can be opened to the data collection application entity.

In a possible implementation, the access network device or an access and mobility management network element may determine a data collection capability that is capable of being sent to the data collection application entity or the application providing entity in the data collection capability supported by the AS of the terminal device. For example, when forwarding, to the data collection application entity, the AS data collection capability reported by the terminal device, the access network device or the access and mobility management network element filters the AS data collection capability according to a pre-configured policy, and then sends a selected AS data collection capability to the data collection application entity. In this case, first capability information received by the data collection application entity is first capability information obtained by performing screening by the access network device or the access and mobility management network element, in other words, the received first capability information may be different from the first capability information sent by the terminal device. Alternatively, the access network device or the access and mobility management network element may negotiate with the terminal device to determine specific AS data collection capabilities that can be opened to the data collection application entity. This is not limited herein.

S802: The application providing entity sends a first configuration to the network device. Correspondingly, the network device receives the first configuration from the application providing entity.

The first configuration is used by the terminal device to collect AS data expected by the application providing entity. In this embodiment of this application, the application providing entity delivers the first configuration to configure the terminal device to collect the AS data expected by the application providing entity. In a possible design solution, the first configuration may include an event (event) associated with the expected AS data, an event identification (event ID), a type of the expected AS data, and the like. The event associated with the expected AS data indicates usage or a purpose of the expected AS data. For example, the expected AS data is used for CSI feedback enhancement or beam management. The event identification identifies the event associated with the expected AS data. The foregoing provides several example parameters configured in the first configuration. In addition, other AS data collection-related parameters may be further configured in the first configuration, for example, a data processing manner of the expected AS data, an object to which the expected AS data can be opened/exposed, and an AS data collection periodicity. This is not limited herein.

For example, a format of the first configuration is as follows:
Event: xxx, for example, event 1
Event ID: xxx, for example, ID1
External/Internal application identifier: xxx
Data access configuration file:
   >Data processing instruction: xxx, for example, an instruction for performing singular value decomposition (singular value decomposition, SVD) processing on an original channel matrix measured based on a CSI-RS
   >Data openness restriction: xxx, where for example, the AS data can be opened only to the application providing entity
   Parameters to be collected (the AS data expected to be collected): xx, for example, an eigenvector obtained by decomposing the original channel matrix, an L1-RSRP, reference signal received quality (reference signal received quality, RSRQ), and a signal to interference plus noise ratio (signal to interference plus noise ratio, SINR)
      ...

The data access configuration file includes the data processing instruction and the data openness restriction. The data processing instruction indicates specific processing based on which the expected AS data is obtained. For example, the expected AS data includes the eigenvector obtained by decomposing the original channel matrix, and the eigenvector obtained by decomposing the original channel matrix is configured according to the data processing instruction to be obtained based on the singular value decomposition (singular value decomposition, SVD) processing. The data openness restriction is used for configuring an object to which the collected expected AS data can be opened. For example, the expected AS data collected by the terminal device can be opened only to the application providing entity.

When the network device is an access network device or an access and mobility management network element, the network device may receive the first configuration from the application providing entity through the data collection application entity. In other words, the first configuration sent by the application providing entity is forwarded by the data collection application entity to the network device.

It should be understood that a sequence of performing S801 and S802 is not limited in this embodiment of this application. S801 and S802 may be simultaneously performed, or S801 may be performed first or S802 may be performed first. This is not limited herein.

S803: The network device determines, from the first configuration based on the first capability information, a configuration that is supported by the terminal device and that is used for AS data collection.

In this embodiment of this application, after obtaining the first capability information and the first configuration, the network device screens or filters the first configuration based on the first capability information, to determine specific configurations, in the first configuration, that can be supported/performed/accepted by the terminal device and that is used for the AS data collection.

For example, the AS data collection capability of the terminal device includes: supporting sending of RSRP, SINR, and PRS/SRS measurement data to the application layer of the terminal device, and supporting opening of the AS data to the application providing entity and a network analysis network element (for example, the NWDAF in FIG. 7). For the first configuration, refer to the example in S802. The network device may determine, based on the first capability information, that the terminal device does not support collection of an eigenvector obtained by decomposing the original channel matrix and RSRQ collection, and supports L1-RSRP collection and SINR collection.

When the network device is an access network device or an access and mobility management network element, after determining, in the first configuration, the configuration that is supported by the terminal device and that is used for the AS data collection, the network device may send first feedback information to the data collection application entity. Correspondingly, the data collection application entity receives the first feedback information from the network device. The first feedback information is used to feed back a configuration status supported by the terminal device in the first configuration, for example, specific configurations that can be performed by the terminal device and specific configurations that cannot be performed by the terminal device in the first configuration.

In a possible case, the first feedback information indicates a part or all of the configuration supported by the terminal device in the first configuration. In other words, the network device may feed back, via the first feedback information, whether the terminal device supports all of the configuration in the first configuration or supports the part of the configuration in the first configuration. For example, the first feedback information is indicated by using one bit. When a value of the bit is 1, it indicates that the terminal device supports all of the configuration in the first configuration. When a value of the bit is 0, it indicates that the terminal device supports the part of the configuration in the first configuration.

In another possible case, the network device may feed back, via the first feedback information, specific configurations supported by the terminal device and specific configurations not supported by the terminal device in the first configuration to the data collection application entity. The first feedback information may include at least one of the following: the configuration that is supported by the terminal device and that is used for the AS data collection, a configuration that is not supported by the terminal device and that is used for the AS data collection, or a reason for the configuration that is not supported by the terminal device and that is used for the AS data. Still refer to the foregoing example. The first feedback information may include: the terminal device does not support collection of the eigenvector obtained by decomposing the original channel matrix and RSRQ collection. A reason why collection of the eigenvector obtained by decomposing the original channel matrix is not supported is that an AI model on a terminal device side accepts only original channel data as input data for model training/inference, and does not support the eigenvector obtained through SVD decomposition as input data for model training/inference. A reason why RSRQ collection is not supported is that the terminal device does not have an RSRQ measurement capability. L1-RSRP collection and SINR collection are supported.

Therefore, the data collection application entity may determine, based on the received first feedback information, the configuration status supported by the terminal device in the first configuration, to update the first configuration based on the first feedback information, for example, delete a configuration that is not supported by the terminal device from the first configuration, or add a configuration supported by the terminal device to obtain a second configuration. Each configuration in the second configuration is supported by the terminal device. Further, the data collection application entity sends the second configuration to the terminal device, and correspondingly, the terminal device receives the second configuration from the data collection application entity, so that the terminal device can complete corresponding AS data collection based on the second configuration. For example, the second configuration includes the following configurations: configuring the terminal device to obtain a collected L1-RSRP and a collected SINR based on CSI-RS measurement, and configuring a periodicity of collecting an L1-RSRP and an SINR by the terminal device to 100 milliseconds (milliseconds, ms).
Event: event 1
Event ID: ID1
External/Internal application identifier: xxx
Parameters to be collected (the AS data expected to be collected): L1-RSRP and SINR
Reference signal: CSI-RS
Collection periodicity: 100 ms
   ...

In this case, in a possible design solution, after the data collection application entity receives the first feedback information, the data collection application entity may further send the first feedback information to the application providing entity. Correspondingly, the application providing entity receives the first feedback information from the data collection application entity, so that the application providing entity determines specific configurations, in the configuration delivered by the application providing entity, that can be performed by the terminal device. Specifically, the data collection application entity may directly send the first feedback information to an event use module (for example, the ECAF in FIG. 1) of the application providing entity. In this case, the network device forwards the first feedback information to the application providing entity through the data collection application entity.

In a possible case, the network device may directly send the first feedback information to the application providing entity. Specifically, the network device directly sends the first feedback information to the event use module of the application providing entity.

When the network device is a data collection application entity, the network device directly updates the first configuration based on the configuration that is supported by the terminal device and that is used for the AS data collection in the first configuration, to obtain the second configuration, and sends the second configuration to the terminal device. It may also be understood that the network device updates the first configuration based on the data collection capability supported by the AS of the terminal device, to obtain a configuration (namely, the second configuration) that matches the capability of the terminal device.

According to the foregoing solution, it can be learned that the update of the first configuration is performed by the data collection application entity, and the data collection application entity delivers the second configuration (an updated first configuration) to the terminal device.

In a possible design solution, the data collection application entity may directly send the second configuration to the terminal device, and correspondingly, the terminal device receives the second configuration from the data collection application entity. Specifically, the data collection application entity sends the second configuration to the direct data collection module of the terminal device. After receiving the second configuration, the direct data collection module sends the second configuration to the application layer of the terminal device, and then the application layer of the terminal device sends the second configuration to the AS of the terminal device, so that the AS of the terminal device collects, based on the second configuration, the AS data expected by the application providing entity. Correspondingly, after collecting the AS data expected by the application providing entity, the AS of the terminal device may send the AS data to the data collection application entity through the application layer of the terminal device and the direct data collection module, and then the data collection application entity opens the collected AS data to the application providing entity or another entity (for example, a network analysis network element).

In another possible design solution, the data collection application entity may send the second configuration to the terminal device through the application providing entity. In other words, the second configuration may be forwarded to the terminal device through the application providing entity. Specifically, the data collection application entity sends the second configuration to the indirect data collection module of the application providing entity, and then the indirect data collection module sends the second configuration to the AS of the terminal device, so that the AS of the terminal device collects, based on the second configuration, the AS data expected by the application providing entity. Correspondingly, after sending the collected AS data to the application layer, the AS of the terminal device may send the AS data to the data collection application entity or another entity through the indirect data collection module of the application providing entity. For a specific implementation process, refer to the following method embodiment shown in FIG. 9. Details are not described herein.

In this embodiment of this application, after obtaining the AS data reported by the terminal device, the data collection application entity opens the collected AS data to another entity based on an event exposure subscription procedure. For example, the network analysis network element or the application providing entity initiates an event exposure subscription request to the data collection application entity, where the event exposure subscription request carries an event identification associated with the AS data that needs to be obtained. After obtaining the AS data associated with a corresponding event, the data collection application entity sends the AS data associated with the event to the network analysis network element or the application providing entity.

According to the communication method shown in FIG. 8, the network device senses the data collection capability supported by the AS of the terminal device, screens an AS data collection configuration (for example, the first configuration) delivered by the application providing entity to the terminal device, and filters out a data collection configuration that is not supported by the terminal device from the first configuration, so that the data collection capability supported by the AS of the terminal device adapts to the delivered configuration, to enhance management and control of collected AS data and a related configuration by the network device, so as to implement the AS data collection. In this way, the collected AS data may be opened to the application providing entity or another network entity, so that the application providing entity or the another network entity may complete related event processing based on the open AS data, to implement effective use of the AS data.

It should be understood that, in this embodiment of this application, that the terminal device collects the AS data may include operations such as measuring the AS data and performing related processing on the measured AS data. This is not limited herein.

For ease of understanding, the following describes in detail a specific implementation process of the communication method shown in FIG. 8 with reference to the EVEX architecture shown in FIG. 1 and the 5G system shown in FIG. 7. For example, the communication method provided in embodiments of this application is described in detail by using an example in which the terminal device is UE, the network device is a RAN device, the application providing entity is an ASP, and the data collection application entity is a DCAF. As shown in FIG. 9, the communication method includes the following steps.

S900: An APP and an AS perform AS data collection negotiation.

For example, the APP and the AS in the UE determine, through negotiation, that the AS can send data to the APP, and the APP determines that the data collected by the AS can be packaged and sent to the DCAF via the EVEX framework.

S901: The AS sends first capability information to the RAN device. Correspondingly, the RAN device receives the first capability information from the AS.

For specific descriptions of the first capability information, refer to related descriptions in S801. Details are not described herein again. For example, the first capability information includes: the AS supports sending of AS data to the APP, and supported AS data types include L1-RSRP and SINR.

Before S902 is performed, procedures such as application function registration (AF registration) and DCAF discovery (discover DCAF) may be further performed in this embodiment of this application. The application function registration mainly relates to interaction between network elements, functions, or modules such as an NRF, the DCAF, and an NWDAF. The DCAF discovery mainly relates to interaction between network elements, functions, or modules such as the NRF and a PAF. For a specific implementation process, refer to related descriptions in an existing implementation. Details are not described herein again. The procedures such as the application function registration and the DCAF discovery may be performed before or after S901, or may be performed simultaneously with S901. This is not limited herein.

S902: The PAF sends a first configuration to the DCAF. Correspondingly, the DCAF receives the first configuration from the PAF.

The first configuration is used by the UE to collect AS data expected by the ASP, and the first configuration may be carried in a data reporting configuration (Ndcad_DataReportingProvisioning) message and sent to the DCAF through an R1 interface. For specific descriptions of the first configuration, refer to related descriptions in S802. Details are not described herein again. For example, the first configuration includes: the ASP expects the UE to collect the L1-RSRP and the RSRQ, an event associated with the L1-RSRP and the RSRQ is an event 1, and an event identification of the event 1 is an ID1.

It should be understood that, the PAF may deliver a configuration, to the DCAF through the R1 interface, that considers that the DCAF/ASP is in a trusted domain (trusted domain). If the DCAF/ASP is outside the trusted domain, authentication and authorization need to be performed by an NEF.

S903: The DCAF sends the first configuration to the RAN device. Correspondingly, the RAN device receives the first configuration from the DCAF.

S904: The RAN device determines, from the first configuration based on the first capability information, a configuration that is supported by the UE and that is used for AS data collection.

For example, the RAN device may determine, based on the first capability information, that the AS supports sending of the AS data to the APP, and that the supported AS data types include L1-RSRP and SINR. However, in the first configuration, the ASP expects the UE to collect an L1-RSRP and RSRQ. Therefore, the RAN device may determine that the UE does not support RSRQ collection, and therefore may determine that the configuration, in the first configuration, that is supported by the UE and that is used for the AS data collection supports L1-RSRP collection.

S905: The RAN device sends first feedback information to the DCAF. Correspondingly, the DCAF receives the first feedback information from the RAN device.

For example, after S904 is performed, the RAN device feeds back, via the first feedback information, specific configurations that can be performed by the UE and specific configurations that cannot be performed by the UE in the first configuration. For example, the first feedback information includes a configuration that the UE supports L1-RSRP collection and a configuration that the UE does not support RSRQ collection.

S906: The DCAF sends a second configuration to a DDCC. Correspondingly, the DDCC receives the second configuration from the DACF.

The second configuration is obtained through updating based on the first feedback information. For example, after receiving the first feedback information, the DCAF updates the first configuration based on the first feedback information, for example, deletes an AS data configuration that is not supported by the UE from the first configuration, to obtain a second configuration. The second configuration is a configuration that is supported by the UE and that is used for the AS data collection. For example, the second configuration includes: the ASP expects the UE to collect an L1-RSRP, an event associated with the L1-RSRP is an event 1, and an event identification of the event 1 is an ID1.

S907: The DDCC sends the second configuration to the APP. Correspondingly, the APP receives the second configuration from the DDCC.

S908: The APP sends the second configuration to the AS. Correspondingly, the AS receives the second configuration from the APP.

Based on S907 and S908, the AS in the UE obtains the second configuration from the DCAF through the DDCC and the APP, to collect AS data (for example, the L1-RSRP) based on the second configuration. Further, after collecting the AS data, the AS may send the collected AS data to the DCAF through the APP and the DDCC.

In a possible design solution, the DDCC may further send the collected AS data to the RAN device by invoking a data reporting service (Ndcaf_DataReporting service), and then the RAN device sends the collected AS data to the DCAF. Alternatively, after receiving the AS data sent by the AS, the APP sends the AS data to an IDCC in the ASP through an R8 interface, and then the IDCC sends the AS data to the DCAF through an R3 interface.

In this way, the DCAF may obtain, based on the foregoing procedure, AS data associated with different events, and may open the collected AS data of the different events to another entity, function, or module based on an event exposure subscription (event exposure subscription) procedure, for example, an ECAF, an NEF, or an NWDAF in the ASP. For example, if the ECAF subscribes to AS data related to an event 1 from the DCAF, the DCAF sends the AS data related to the event 1 to the ECAF based on an identification of the event 1, so that the ECAF completes the event 1 based on the AS data related to the event 1.

According to the communication method shown in FIG. 9, the RAN device senses the AS data collection capability of the UE, and screens, based on the AS data collection capability of the UE, an AS data collection configuration delivered by the ASP, to provide the UE with an appropriate configuration to report AS data.

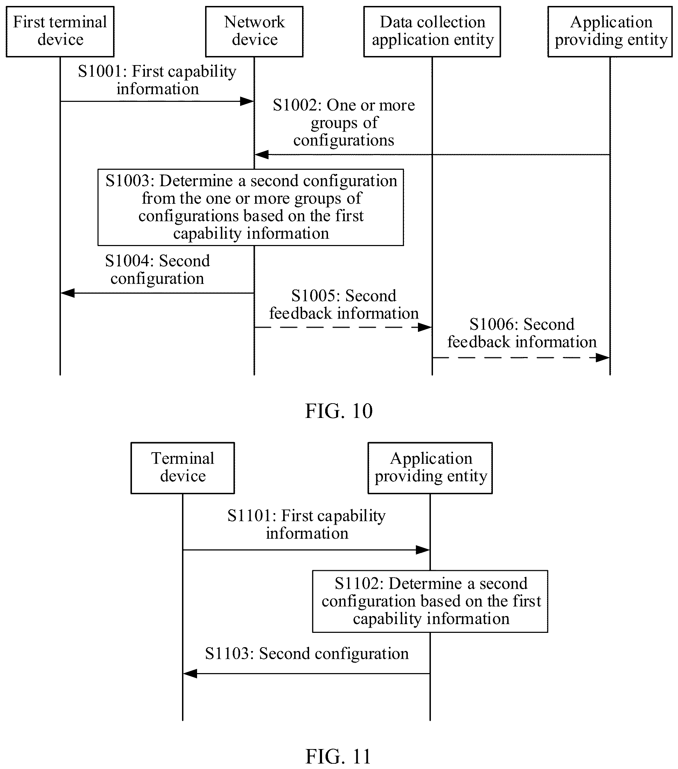

In addition, an embodiment of this application further provides a communication method. A network device does not screen an AS data collection configuration delivered by an application providing entity, but performs matching processing based on AS data collection capabilities of different terminal devices and the AS data collection configuration delivered by the application providing entity, and delivers an AS data collection configuration suitable for each terminal device to the terminal device, to collect AS data. For example, as shown in FIG. 10, an example in which a network device is an access network device (for example, a RAN device) or an access and mobility management network element (for example, an AMF) is used. The communication method includes the following steps.

S1001: A first terminal device sends first capability information to the network device. Correspondingly, the network device receives the first capability information from the first terminal device.

The first capability information indicates a data collection capability supported by an AS of the first terminal device. For related descriptions of the first capability information, refer to related descriptions in S801. Details are not described herein again. For example, the first capability information of the first terminal device indicates that the AS of the first terminal device supports only L1-RSRP collection. Different terminal devices correspond to different first capability information. For example, first capability information of a second terminal device indicates that an AS of the second terminal device supports only channel impulse response collection.

S1002: An application providing entity sends one or more groups of configurations to the network device. Correspondingly, the network device receives the one or more groups of configurations from the application providing entity.

Each of the one or more groups of configurations may be used by a terminal device to collect AS data expected by the application providing entity, and expected-to-be-collected AS data configured in the one or more groups of configurations varies. For example, the application providing entity delivers three groups of configurations to the network device, where a configuration 1 is used for configuring a terminal device to collect an L1-RSRP, a configuration 2 is used for configuring a terminal device to collect a channel impulse response, and a configuration 3 is used for configuring a terminal device to collect LOS/NLOS label data. In this embodiment of this application, in addition to the AS data expected to be collected, each group of configurations may further include event information associated with the AS data expected to be collected, and the like. For specific descriptions, refer to related descriptions of the first configuration in S802. Details are not described herein again. For example, the application providing entity is the ASP in FIG. 1, and the one or more groups of configurations may be delivered by the PAF in the ASP.

It should be understood that at least two groups of configurations in the plurality of groups of configurations may include some same configurations. For example, a configuration 1 is used for configuring a terminal device to collect an L1-RSRP and RSRQ, a configuration 2 is used for configuring a terminal device to collect an L1-RSRP and an SINR, and configurations related to L1-RSRP collection in the configuration 1 and the configuration 2 are the same.

In a possible design solution, the application providing entity sends the one or more groups of configurations to the network device through the data collection application entity. In other words, the configuration delivered by the application providing entity is forwarded to the network device through the data collection application entity. For example, the data collection application entity is the DCAF in FIG. 1.

S1003: The network device determines a second configuration from the one or more groups of configurations based on the first capability information.

The second configuration is a configuration that is supported by the first terminal device and that is used for AS data collection. For example, the network device determines, based on the first capability information, that the first terminal device supports only L1-RSRP collection. Refer to the example in S1002, the network device may determine that the configuration 1 matches the AS data collection capability of the first terminal device, to determine the configuration 1 as the second configuration. It should be understood that the AS data collection capability of the first terminal device may match the one or more groups of configurations.

S1004: The network device sends the second configuration to the first terminal device. Correspondingly, the first terminal device receives the second configuration from the network device.

In a possible design solution, the network device sends the second configuration to the first terminal device through the data collection application entity.

In this embodiment of this application, after receiving the second configuration, the first terminal device collects AS data based on the second configuration, and sends the collected AS data to the data collection application entity. For example, after collecting an L1-RSRP, the first terminal device reports the L1-RSRP to the data collection application entity. For a process of reporting the AS data by the first terminal device and a process of opening the AS data to another entity after the data collection application entity obtains the AS data, refer to related descriptions in S803 or S908. Details are not described herein again.

Further, the communication method provided in this embodiment of this application may further include the following steps.

S1005: The network device sends second feedback information to the data collection application entity. Correspondingly, the data collection application entity receives the second feedback information from the network device.

The second feedback information indicates an AS data collection status corresponding to a configuration performed by the terminal device in the one or more groups of configurations. In other words, the network device feeds back, via the second feedback information, specific configurations, in the one or more groups of configurations, that are performed by the terminal device, that is, the specific configurations based on which the terminal device collects specific AS data.

In this embodiment of this application, the second feedback information may include at least one of the following: collected AS data, uncollected AS data, or a reason for the uncollected AS data. For example, in the three groups of configurations (the configuration 1 to the configuration 3) delivered by the application providing entity, the first terminal device completes L1-RSRP collection based on the configuration 1, the second terminal device completes channel impulse response collection based on the configuration 2, and no terminal device with a satisfied capability matches the configuration 3. Therefore, the network device may determine that the collected AS data includes an L1-RSRP and a channel impulse response, and the uncollected AS data includes LOS/NLOS label data, where a reason why LOS/NLOS label data collection is not completed is that no terminal device supporting LOS/NLOS label data collection exists in terminal devices that report AS data collection capabilities, so that the data collection application entity is notified via the second feedback information.

S 1006: The data collection application entity sends the second feedback information to the application providing entity. Correspondingly, the application providing entity receives the second feedback information from the data collection application entity.

Specifically, the data collection application entity notifies, via the second feedback information, the application providing entity of an execution status of the AS data collection configuration delivered by the application providing entity.

According to the communication method shown in FIG. 10, the network device matches, based on the AS data collection capability reported by the terminal device and from the one or more groups of configurations delivered by the application providing entity, the configuration that can be performed based on the capability of the terminal device, and sends the configuration to the terminal device, to complete AS data collection.

In the communication methods shown in FIG. 8 to FIG. 10, the access network device (for example, the RAN device), the access and mobility management network element (for example, the AMF), or the data collection application entity (for example, the DCAF) may sense an AS data collection capability of the terminal device, and match or select, an appropriate AS data collection configuration for the terminal device, to implement AS data collection. In addition, the application providing entity may alternatively sense or obtain an AS data collection capability of the terminal device, and directly deliver a matched configuration to the terminal device based on the AS data collection capability of the terminal device, to implement AS data collection.

For example, FIG. 11 is a schematic flowchart of still another communication method according to an embodiment of this application. As shown in FIG. 11, the communication method includes the following steps.

S1101: A terminal device sends first capability information to an application providing entity. Correspondingly, the application providing entity receives the first capability information from the terminal device.

The first capability information indicates a data collection capability supported by an AS of the terminal device. In this case, the data collection capability that is supported by the AS and that is reported by the terminal device may be all or a part of a data collection capability supported by the AS of the terminal device.

In a possible design solution, before S1101 is performed, the AS data collection capability reported by the terminal device needs to be authenticated by a network device (for example, an access network device or an access and mobility management network element). In other words, the network device may manage and control data collection capability information that is opened or exposed (exposure) by the terminal device to the application providing entity, for example, whether the AS data collection capability of the terminal device can be opened to the application providing entity, and specific AS data collection capabilities that can be opened to the application providing entity.

In a possible implementation, the network device may negotiate with the terminal device to determine specific AS data collection capabilities that can be opened to the application providing entity. In this case, the first capability information reported by the terminal device is authenticated. Alternatively, in a process of forwarding the first capability information to the application providing entity, the network device filters the AS data collection capability according to a pre-configured policy, and then sends a selected AS data collection capability to the application providing entity. In this case, the first capability information received by the application providing entity is first capability information obtained by performing screening by the network device, in other words, the received first capability information may be different from the first capability information sent by the terminal device.

In a possible design solution, the terminal device may sequentially send the first capability information to the application providing entity through the network device and a data collection application entity.

Optionally, the terminal device may further send, to the application providing entity, capability information related to an application layer of the terminal device, for example, a capability of supporting the application layer in encapsulating data collected by the AS.

S1102: The application providing entity determines a second configuration based on the first capability information.

The second configuration is a configuration that is supported by the terminal device and that is used for AS data collection. For example, after receiving the first capability information, the application providing entity may directly customize configuration information, namely, the second configuration, for the terminal device based on the AS data collection capability supported by the terminal device, so that the delivered configuration matches the data collection capability of the terminal device. For example, if the terminal device supports L1-RSRP collection and RSRQ collection, but does not support channel impulse response collection, the second configuration may be used for configuring the terminal device to collect an L1-RSRP and/or RSRQ. For example, the application providing entity is the ASP in FIG. 1, and the second configuration may be configured and delivered by the PAF in the ASP.

S1103: The application providing entity sends the second configuration to the terminal device. Correspondingly, the terminal device receives the second configuration from the application providing entity.

For example, the application providing entity may forward the second configuration to the terminal device through the data collection application entity. In this way, the terminal device may complete collection of corresponding AS data based on the second configuration. For a process of delivering the second configuration and a process of reporting the AS data, refer to related descriptions in S803 or S906 to S908. Details are not described herein again.

According to the communication method shown in FIG. 11, the application providing entity may directly configure the appropriate AS data collection configuration for the terminal device by sensing the AS data collection capability of the terminal device, to implement the AS data collection.

It may be understood that, in the foregoing embodiments, the method and/or the step implemented by the network device may alternatively be implemented by a part (for example, a processor, a chip, a chip system, a circuit, a logic module, or software) that may be used in the network device; and the method and/or the step implemented by the data collection application entity may alternatively be implemented by a part (for example, a processor, a chip, a chip system, a circuit, a logic module, or software) that may be used in the data collection application entity; the method and/or the step implemented by the application providing entity may alternatively be implemented by a part (for example, a processor, a chip, a chip system, a circuit, a logic module, or software) that may be used in the application providing entity; and the method and/or the step implemented by the terminal device may alternatively be implemented by a part (for example, a processor, a chip, a chip system, a circuit, a logic module, or software) that may be used in the terminal device.

The foregoing mainly describes the solutions provided in this application. Correspondingly, this application further provides a communication apparatus. The communication apparatus is configured to implement various methods in the foregoing method embodiments. The communication apparatus may be the network device in the foregoing method embodiments, an apparatus including the network device, or a part, for example, a chip or a chip system, that may be used in the network device. Alternatively, the communication apparatus may be the data collection application entity in the foregoing method embodiments, an apparatus including the data collection application entity, or a part, for example, a chip or a chip system, that may be used in the data collection application entity. Alternatively, the communication apparatus may be the application providing entity in the foregoing method embodiments, an apparatus including the application providing entity, or a part, for example, a chip or a chip system, that may be used in the application providing entity. Alternatively, the communication apparatus may be the terminal device in the foregoing method embodiments, an apparatus including the terminal device, or a part, for example, a chip or a chip system, that may be used in the terminal device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

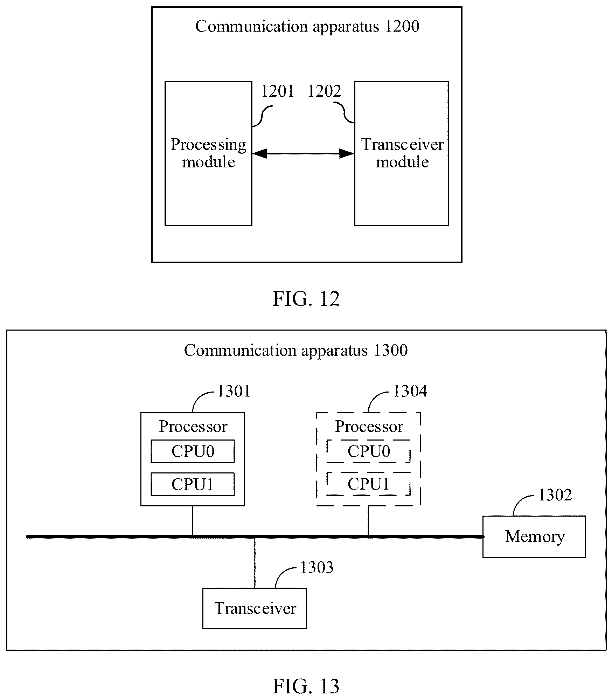

For example, the communication apparatus is the network device, the data collection application entity, the application providing entity, or the terminal device in the foregoing method embodiments. FIG. 12 is a diagram of a structure of a communication apparatus according to an embodiment of this application. As shown in FIG. 12, the communication apparatus 1200 includes a processing module 1201 and a transceiver module 1202. The processing module 1201 is configured to perform a processing function of the network device, the data collection application entity, the application providing entity, or the terminal device in the foregoing method embodiments. The transceiver module 1202 is configured to perform a transceiver function of the network device, the data collection application entity, the application providing entity, or the terminal device in the foregoing method embodiments.

All related content of the steps in the foregoing method embodiments may be cited in function descriptions of the corresponding functional modules. Details are not described herein again.

The communication apparatus 1200 provided in this embodiment may perform the foregoing compute task scheduling method. Therefore, for technical effects that can be achieved by the communication apparatus 1200, refer to the foregoing method embodiments. Details are not described herein again.

In a possible design solution, in this embodiment of this application, the transceiver module 1202 may include a receiving module and a sending module (not shown in FIG. 12). The transceiver module is configured to implement a sending function and a receiving function of the communication apparatus 1200.

In a possible design solution, the communication apparatus 1200 may further include a storage module (not shown in FIG. 12), and the storage module stores a program or instructions. When the processing module 1201 executes the program or the instructions, the communication apparatus 1200 is caused to perform a function of the network device, the data collection application entity, the application providing entity, or the terminal device in the method shown in any one of FIG. 8 to FIG. 11.

It should be understood that the processing module 1201 in the communication apparatus 1200 may be implemented by a processor or a processor-related circuit component, and may be a processor or a processing unit. The transceiver module 1202 may be implemented by a transceiver or a transceiver-related circuit component, and may be a transceiver or a transceiver unit.

For example, FIG. 13 is a diagram of a structure of another communication apparatus according to an embodiment of this application. The communication apparatus may be a network device, a data collection application entity, an application providing entity, or a terminal device; or may be a chip (system) or another component or part that may be disposed in a network device, a data collection application entity, an application providing entity, or a terminal device. As shown in FIG. 13, the communication apparatus 1300 may include a processor 1301. In a possible design solution, the communication apparatus 1300 may further include a memory 1302 and/or a transceiver 1303. The processor 1301 is coupled to the memory 1302 and the transceiver 1303, for example, may be connected to the memory 1302 and the transceiver 1303 through a communication bus.

The following specifically describes each part of the communication apparatus 1300 with reference to FIG. 13.

The processor 1301 is a control center of the communication apparatus 1300, and may be one processor, or may be a collective term of a plurality of processing elements. For example, the processor 1301 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

In a possible design solution, the processor 1301 may perform various functions of the communication apparatus 1300 by running or executing a software program stored in the memory 1302 and invoking data stored in the memory 1302.

During specific implementation, in an embodiment, the processor 1301 may include one or more CPUs, such as a CPU0 and a CPU1 shown in FIG. 13.

During specific implementation, in an embodiment, the communication apparatus 1300 may alternatively include a plurality of processors, for example, the processor 1301 and a processor 1304 shown in FIG. 13. Each of the processors may be a single-core processor (single-CPU), or may be a multi-core processor (multi-CPU). The processor herein may be one or more devices, circuits, and/or processing cores configured to process data (for example, computer program instructions).

The memory 1302 is configured to store the software program for executing the solutions in this application, and the processor 1301 controls execution. For a specific implementation, refer to the foregoing method embodiments. Details are not described herein again.

In a possible design solution, the memory 1302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 1302 may be integrated with the processor 1301, or may exist independently, and is coupled to the processor 1301 through an interface circuit (not shown in FIG. 13) of the communication apparatus 1300. This is not specifically limited in this embodiment of this application.

The transceiver 1303 is configured to communicate with another communication apparatus. For example, the communication apparatus 1300 is a terminal device, and the transceiver 1303 may be configured to communicate with a network device or communicate with another terminal device. For another example, the communication apparatus 1300 is a network device, and the transceiver 1303 may be configured to communicate with a terminal device or communicate with another network device.

In a possible design solution, the transceiver 1303 may include a receiver and a transmitter (not separately shown in FIG. 13). The receiver is configured to implement a receiving function, and the transmitter is configured to implement a sending function.

In a possible design solution, the transceiver 1303 may be integrated with the processor 1301, or may exist independently, and is coupled to the processor 1301 through an interface circuit (not shown in FIG. 13) of the communication apparatus 1300. This is not specifically limited in this embodiment of this application.

It should be noted that the structure of the communication apparatus 1300 shown in FIG. 13 does not constitute a limitation on the communication apparatus. An actual communication apparatus may include more or fewer parts than those shown in the figure, or some parts may be combined, or a different part arrangement may be used.

In addition, for technical effects of the communication apparatus 1300, refer to the technical effects of the compute task scheduling method in the foregoing method embodiments. Details are not described herein again.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or some of the foregoing embodiments may be implemented by software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A communication method, wherein the method comprises:
receiving, by a network device, first capability information from a terminal device, wherein the first capability information indicates a data collection capability supported by an access stratum AS of the terminal device;
receiving, by the network device, a first configuration from an application providing entity, wherein the first configuration is used by the terminal device to collect AS data expected by the application providing entity; and
determining, by the network device from the first configuration based on the first capability information, a configuration that is supported by the terminal device and that is used for AS data collection.

2. The method according to claim 1, wherein the network device is an access network device or an access and mobility management network element; and the receiving, by the network device, the first configuration from the application providing entity comprises:
receiving, by the network device, the first configuration from the application providing entity through a data collection application entity.

3. The method according to claim 1 or 2, wherein the method further comprises:
determining, by the network device, a data collection capability that is in the data collection capability supported by the AS of the terminal device and that is capable of being sent to the data collection application entity or the application providing entity.

4. The method according to any one of claims 1 to 3, wherein the method further comprises:
sending, by the network device, first feedback information to the data collection application entity.

5. The method according to claim 4, wherein the method further comprises:
sending, by the network device, the first feedback information to the application providing entity through the data collection application entity.

6. The method according to claim 1, wherein the network device is a data collection application entity, and the method further comprises:
sending, by the network device, first feedback information to the application providing entity.

7. The method according to any one of claims 4 to 6, wherein the first feedback information indicates a part or all of the configuration supported by the terminal device in the first configuration.

8. The method according to any one of claims 4 to 7, wherein the first feedback information comprises at least one of the following: the configuration that is supported by the terminal device and that is used for the AS data collection, a configuration that is not supported by the terminal device and that is used for the AS data collection, or a reason for the configuration that is not supported by the terminal device and that is used for the AS data.

9. The method according to any one of claims 6 to 8, wherein the method further comprises:
sending, by the network device, a second configuration to the terminal device, wherein the second configuration is obtained by updating the first configuration based on the configuration that is supported by the terminal device and that is used for the AS data collection.

10. The method according to claim 9, wherein the sending, by the network device, the second configuration to the terminal device comprises:
sending, by the network device, the second configuration to the terminal device through the application providing entity.

11. The method according to any one of claims 1 to 10, wherein the data collection capability supported by the AS of the terminal device comprises: supporting or not supporting sending of AS data to an application layer of the terminal device.

12. The method according to any one of claims 1 to 10, wherein the data collection capability supported by the AS of the terminal device comprises: supporting sending of AS data to an application layer of the terminal device, and the data collection capability supported by the AS of the terminal device further comprises at least one of the following: a type of AS data whose sending to the application layer of the terminal device is supported, a supported AS data format, or a supported object for obtaining AS data.

13. A communication method, wherein the method comprises:
receiving, by a data collection application entity, a first configuration from an application providing entity, wherein the first configuration is used by a terminal device to collect AS data expected by the application providing entity;
receiving, by the data collection application entity, first feedback information from a network device, wherein the first feedback information indicates a part or all of a configuration supported by the terminal device in the first configuration; and
sending, by the data collection application entity, a second configuration to the terminal device, wherein the second configuration is obtained by updating the first configuration based on the first feedback information.

14. The method according to claim 13, wherein the first feedback information comprises at least one of the following: a configuration that is supported by the terminal device and that is used for AS data collection, a configuration that is not supported by the terminal device and that is used for the AS data collection, or a reason for the configuration that is not supported by the terminal device and that is used for the AS data.

15. The method according to claim 13 or 14, wherein the sending, by the data collection application entity, the second configuration to the terminal device comprises:
sending, by the data collection application entity, the second configuration to the terminal device through the application providing entity.

16. A communication method, wherein the method comprises:
receiving, by a network device, first capability information from a first terminal device, wherein the first capability information indicates a data collection capability supported by an access stratum AS of the first terminal device;
receiving, by the network device, one or more groups of configurations from an application providing entity, wherein each group of the one or more groups of configurations is used by a terminal device to collect AS data expected by the application providing entity;
determining, by the network device, a second configuration from the one or more groups of configurations based on the first capability information, wherein the second configuration is a configuration that is supported by the first terminal device and that is used for AS data collection; and
sending, by the network device, the second configuration to the first terminal device.

17. The method according to claim 16, wherein the receiving, by the network device, the one or more configurations from the application providing entity comprises:
receiving, by the network device, the one or more groups of configurations from the application providing entity through a data collection application entity.

18. The method according to claim 16 or 17, wherein the sending, by the network device, the second configuration to the first terminal device comprises:
sending, by the network device, the second configuration to the first terminal device through the data collection application entity.

19. The method according to any one of claims 16 to 18, wherein the method further comprises:
sending, by the network device, second feedback information to the data collection application entity, wherein the second feedback information indicates an AS data collection status corresponding to a configuration performed by the terminal device in the one or more groups of configurations.

20. The method according to claim 19, wherein the second feedback information comprises at least one of the following: collected AS data, uncollected AS data, or a reason for the uncollected AS data.

21. The method according to any one of claims 16 to 20, wherein the network device is an access network device or an access and mobility management network element.

22. The method according to any one of claims 16 to 21, wherein the data collection capability supported by the AS of the first terminal device comprises: whether sending of AS data to an application layer of the first terminal device is supported.

23. The method according to any one of claims 16 to 21, wherein the data collection capability supported by the AS of the first terminal device comprises: sending of AS data to an application layer of the first terminal device is supported, and the data collection capability supported by the AS of the first terminal device further comprises at least one of the following: a type of AS data whose sending to the application layer of the first terminal device is supported, a supported AS data format, or a supported object for obtaining AS data.

24. The method according to any one of claims 16 to 23, wherein the method further comprises:
determining, by the network device, a data collection capability that is in the data collection capability supported by the AS of the first terminal device and that is capable of being sent to the data collection application entity or the application providing entity.

25. A communication method, wherein the method comprises:
receiving, by an application providing entity, first capability information from a terminal device, wherein the first capability information indicates a data collection capability supported by an access stratum AS of the terminal device;
determining, by the application providing entity, a second configuration based on the first capability information, wherein the second configuration is a configuration that is supported by the terminal device and that is used for AS data collection; and
sending, by the application providing entity, the second configuration to the terminal device.

26. The method according to claim 25, wherein the sending, by the application providing entity, the second configuration to the terminal device comprises:
sending, by the application providing entity, the second configuration to the terminal device through a data collection application entity.

27. The method according to claim 25 or 26, wherein the data collection capability supported by the AS of the terminal device comprises: supporting or not supporting sending of AS data to an application layer of the terminal device.

28. The method according to claim 25 or 26, wherein the data collection capability supported by the AS of the terminal device comprises: supporting sending of AS data to an application layer of the terminal device, and the data collection capability supported by the AS of the terminal device further comprises at least one of the following: a type of AS data whose sending to the application layer of the terminal device is supported, a supported AS data format, or a supported object for obtaining AS data.

29. A communication method, wherein the method comprises:
sending first capability information, wherein the first capability information indicates a data collection capability supported by an access stratum AS of a terminal device; and
receiving a second configuration, wherein the second configuration is a configuration that is supported by the terminal device and that is used for AS data collection, and the second configuration is determined based on the first capability information.

30. The method according to claim 29, wherein the sending the first capability information comprises:
sending the first capability information to an access network device or an access and mobility management network element.

31. The method according to claim 29, wherein the sending the first capability information comprises:
sending the first capability information to a data collection application entity.

32. The method according to claim 29, wherein the sending the first capability information comprises:
sending the first capability information to an application providing entity.

33. The method according to claim 32, wherein the receiving the second configuration comprises:
receiving the second configuration from the application providing entity.

34. The method according to any one of claims 29 to 32, wherein the receiving the second configuration comprises:
receiving the second configuration from the data collection application entity.

35. The method according to any one of claims 29 to 34, wherein the data collection capability supported by the AS of the terminal device comprises: supporting or not supporting sending of AS data to an application layer of the terminal device.

36. The method according to any one of claims 29 to 34, wherein the data collection capability supported by the AS of the terminal device comprises: supporting sending of AS data to an application layer of the terminal device, and the data collection capability supported by the AS of the terminal device further comprises at least one of the following: a type of AS data whose sending to the application layer of the terminal device is supported, a supported AS data format, or a supported object for obtaining AS data.

37. A communication apparatus, wherein the apparatus comprises a processing module and a transceiver module, wherein
the processing module is configured to perform a processing function in the method according to any one of claims 1 to 36; and
the transceiver module is configured to perform a transceiver function in the method according to any one of claims 1 to 36.

38. A communication apparatus, comprising a processor and an interface circuit, wherein the interface circuit is configured to: receive a signal from another communication apparatus different from the communication apparatus and transmit the signal to the processor; or send a signal from the processor to another communication apparatus different from the communication apparatus, and the processor is configured to implement, through a logic circuit or by executing code instructions, the method according to any one of claims 1 to 36.

39. A communication apparatus, comprising a processor, wherein the processor is configured to execute a computer program, to cause the communication apparatus to perform the method according to any one of claims 1 to 36.

40. A communication chip, wherein the communication chip stores instructions; and when the chip runs on a communication device, the method according to any one of claims 1 to 36 is implemented.

41. A computer-readable storage medium, wherein the storage medium stores a computer program or instructions; and when the computer program or the instructions is/are executed by a communication apparatus, the method according to any one of claims 1 to 36 is implemented.

42. A computer program product, comprising computer program code, wherein when the computer program code is run on a communication apparatus, the communication apparatus implements the method according to any one of claims 1 to 36.
